# FASCICULE DE BREVET EUROPEEN

(11) **EP 3 963 251 B1**
(45) Date de publication et mention de la délivrance du brevet: **05.04.2023**
(21) Numéro de dépôt: 20721587.2
(22) Date de dépôt: 27.04.2020
(51) Int. Cl.: F17C 13/02

(54) **RÉCIPIENT DE FLUIDE SOUS PRESSION AVEC DISPOSITIF INDICATEUR DE PRESSION**
DRUCKFLÜSSIGKEITSBEHÄLTER MIT DRUCKANZEIGER
PRESSURIZED-FLUID CONTAINER WITH A PRESSURE INDICATOR DEVICE

(30) Priorité: 03.05.2019 FR 1904644
(43) Date de publication de la demande: 09.03.2022
(73) Titulaire: L'Air Liquide, société anonyme pour l'Étude et l'Exploitation des procédés Georges Claude, 75007 Paris (FR); ALIZENT INTERNATIONAL, 75007 Paris (FR)
(72) Inventeur: BACOT, Patrick, 92400 Courbevoie (FR); FRENAL, Antoine, 78350 Les Loges En Josas (FR)
(74) Mandataire: Air Liquide
(86) Numéro de dépôt international: PCT/EP2020/061576
(87) Numéro de publication internationale: WO 2020/224999

(56) Documents cités:
- WO-A1-2017/064380
- LU-A1- 91 948
- US-A- 3 677 089
- US-A- 5 014 786
- US-A1- 2005 016 284
- US-A1- 2005 229 981

## Description

La présente invention concerne un récipient de fluide sous pression avec indicateur de la pression dans ledit récipient.

US3677089A divulgue un tel récipient.

Par « fluide », on entend un fluide industriel ou médical qui peut être conditionné à l'état gazeux, liquide ou diphasique (gaz et liquide) dans un récipient de fluide, tel une bouteille, fournissant le fluide à un dispositif utilisateur dudit fluide. Habituellement, un dispositif de fourniture de fluide comprend un récipient de fluide conçu pour contenir un fluide sous pression, c'est-à-dire un fluide à une pression supérieure à la pression de l'atmosphère ambiante.

Du fait de l'utilisation du fluide, il est nécessaire de procéder régulièrement au remplissage du récipient. La nécessité d'un remplissage dépend de l'évaluation de la quantité de fluide restant dans le récipient. A cette fin, le récipient de fluide peut être équipé de manomètres mécaniques indiquant la pression régnant à l'intérieur du récipient de fluide.

Toutefois, ces manomètres imposent une lecture directe de l'afficheur par un opérateur et ne permettent pas d'automatiser le suivi du contenu du récipient de fluide et la logistique associée.

On connaît du document WO2017/064380A1 un dispositif indicateur de pression simplifié comprenant un support d'information mobile en fonction de la pression de fluide. Un inconvénient de ce dispositif est toujours de nécessiter une visualisation par l'utilisateur, ce qui peut s'avérer peu commode dans des conditions d'accès difficile ou lorsqu'il s'agit de surveiller plusieurs récipients de fluide.

Pour remédier à cela, une solution est d'utiliser des capteurs analogiques fournissant un signal électrique représentatif de la quantité de fluide contenue dans le récipient de fluide, la lecture et la transmission de l'information sur la quantité de fluide étant opérées à distance par signal radiofréquence.

Toutefois, ces capteurs sont complexes et entraînent une augmentation rédhibitoire du coût d'équipement au vu du coût individuel des récipients et/ou du grand nombre de récipients à gérer. En outre, ils nécessitent des puissances d'alimentation électrique et de lecture relativement élevées, de l'ordre de quelques mW, ce qui impose d'embarquer une source d'énergie, telle une pile ou une batterie, au niveau du récipient de fluide. Outre des problèmes de coûts et de maintenance, la sécurité des installations peut être compromise en cas de coupure d'alimentation électrique ou de déchargement des piles ou de la batterie.

Le problème à résoudre est dès lors de pallier tout ou partie des inconvénients mentionnés ci-dessus, notamment de fournir un récipient de fluide permettant une détermination plus simple, plus rapide et automatique de la quantité de fluide contenue dans ledit récipient, et ce même à une distance supérieure à plusieurs mètres.

A cette fin, la solution de l'invention est un récipient de fluide sous pression comprenant un dispositif indicateur de pression, ledit dispositif comprenant :
- un piston sensible à la pression régnant dans le récipient, le piston pouvant se déplacer, selon la valeur de la pression dans le récipient, entre au moins une position rétractée et une position déployée,
- un organe d'indication destiné à coopérer avec le piston, l'organe d'indication pouvant se déplacer, selon la position du piston, entre au moins une première position représentative d'une première valeur de pression et une deuxième position représentative d'une deuxième valeur de pression,
- caractérisé en ce qu'il comprend en outre
- un capteur de la position de l'organe d'indication,
- au moins un circuit électrique relié ou intégré audit capteur et configuré pour occuper au moins un premier état électrique ou un deuxième état électrique selon la position de l'organe d'indication,
- une logique électronique reliée au circuit électrique et configurée pour produire un signal électrique représentatif de la position de l'organe d'indication, et
- un organe de communication relié à la logique électronique configuré pour convertir ledit signal électrique en un signal de communication à distance sans fil représentatif de la position de l'organe d'indication.

Selon le cas, l'invention peut comprendre l'une ou plusieurs des caractéristiques suivantes :
- l'organe d'indication comprend un élément magnétique, de préférence un aimant permanent, le capteur de la position de l'élément mobile comprenant un capteur sensible à un champ magnétique induit par l'élément magnétique.
- l'organe d'indication comprend un élément conducteur électrique, le capteur de la position de l'organe d'indication comprenant deux pôles électriques intégrés ou reliés au circuit électrique, lesdits pôles électriques étant destinés à être reliés sélectivement entre eux via l'élément conducteur électrique.
- l'organe d'indication et le capteur sont configurés de sorte qu'un déplacement de l'organe d'indication entre la première position à la deuxième position fait commuter le circuit électrique entre le premier état électrique et le deuxième état électrique.
- le piston est configuré pour occuper la position déployée lorsque la pression dans le récipient est supérieure ou égale à un seuil haut prédéterminé et pour occuper la position rétractée lorsque la pression dans le récipient est inférieure à un seuil bas prédéterminé.
- l'organe d'indication est destiné à coopérer avec le piston de sorte qu'un déplacement du piston de sa position déployée à sa position rétractée entraîne un déplacement automatique de l'organe d'indication de sa première position à sa deuxième position.
- le piston s'étend au moins en partie dans un volume interne sous pression du récipient de sorte que le fluide exerce une pression sur le piston.
- le piston est configuré pour se déplacer en translation entre au moins la position rétractée et la position déployée sous l'effet d'une variation de la pression s'exerçant sur le piston.
- le dispositif comprend un premier élément élastique, de préférence un ressort, configuré pour exercer sur le piston une première force de rappel opposée à la pression s'exerçant sur le piston dans le récipient.
- le récipient comprend une paroi délimitant un volume interne sous pression, au moins une partie du piston pouvant se déplacer en translation dans ledit volume interne et l'organe d'indication étant situé à l'extérieur du volume interne.
- le piston est mobile en translation dans un passage ménagé dans la paroi du récipient, le capteur étant positionné en regard du passage.
- l'organe d'indication et le piston sont solidaires l'un de l'autre, de préférence l'organe d'indication et le piston sont formés d'un bloc, l'organe d'indication formant une portion d'extrémité du piston.
- l'organe d'indication et le piston sont des pièces distinctes et sont configurées de sorte que le piston forme, dans sa position déployée, un organe de blocage de l'organe d'indication et qu'un déplacement du piston vers sa position rétractée libère l'élément mobile et autorise son déplacement entre la première position et la deuxième position.
- le dispositif comprend un deuxième élément élastique, de préférence un ressort, configuré pour exercer une deuxième force de rappel tendant à rappeler l'organe d'indication de la deuxième position à la première position.

L'invention va maintenant être mieux comprise grâce à la description détaillée suivante faite en références aux figures ci-annexées parmi lesquelles :
[Fig. 1] représente un dispositif indicateur de pression selon un mode de réalisation de l'invention,
[Fig. 2] représente un dispositif indicateur de pression selon un autre mode de réalisation de l'invention,
[Fig. 3] représente un dispositif indicateur de pression selon un autre mode de réalisation de l'invention,
[Fig. 4] représente le dispositif selon [Fig. 3] dans une autre position,
[Fig. 5] illustre la transmission à distance d'une information sur la pression de fluide dans un récipient au moyen d'un dispositif indicateur selon un mode de réalisation de l'invention,
[Fig. 6] illustre une variante de réalisation de l'invention.

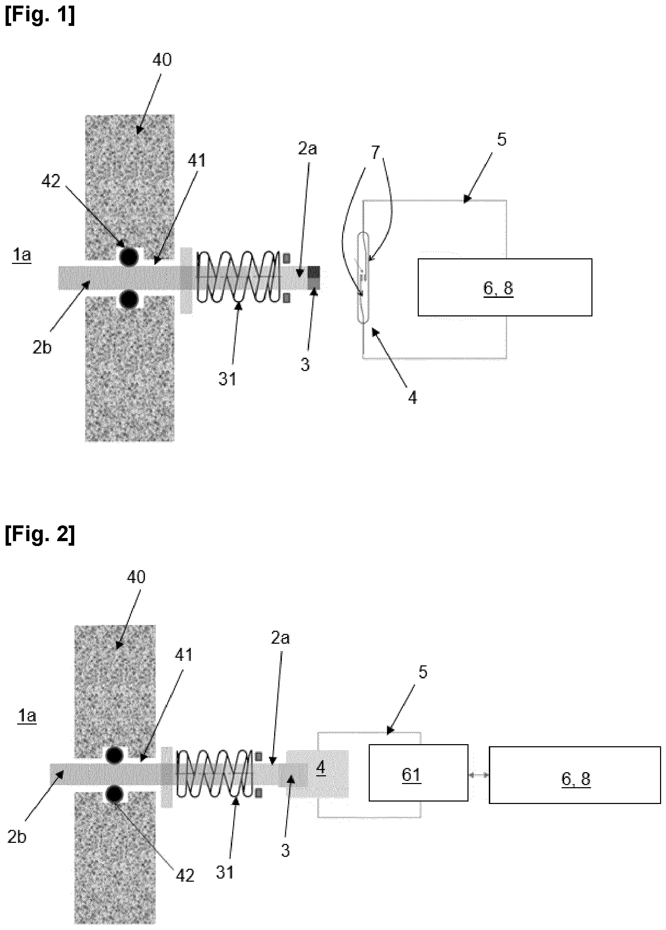

[Fig. 1] représente schématiquement un dispositif indicateur de pression selon un mode de réalisation de l'invention, lequel dispositif est intégré à un récipient 1 de fluide sous pression (non visible sur [Fig. 1]). A noter que dans le cadre de l'invention, le fluide peut être un fluide à l'état gazeux, liquide ou diphasique gaz-liquide, pur ou résultant d'un mélange de fluides de différentes natures. De préférence le fluide est à l'état gazeux.

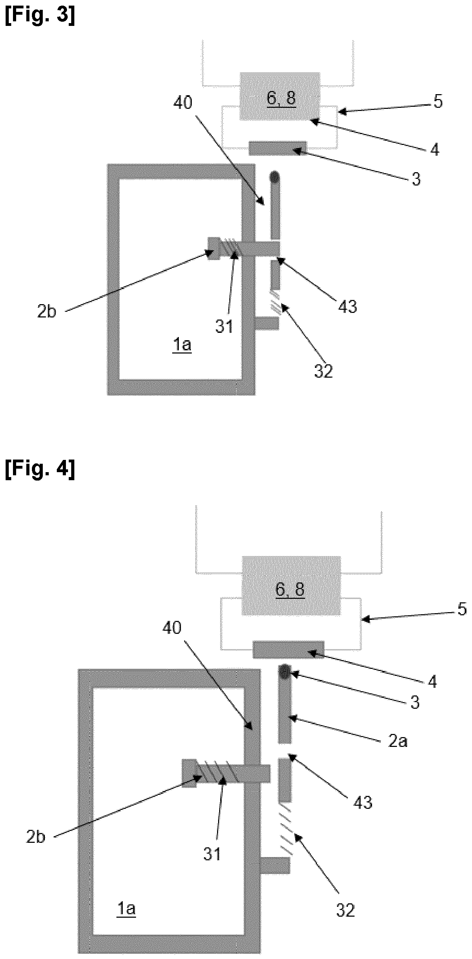

De préférence, le récipient 1 de fluide sous pression, par exemple une bouteille 1, de type industriel ou médical, est muni d'un orifice dans lequel est fixé un raccord fluidique ou port appelé robinet 20, avec ou sans détendeur intégré. Comme schématisé sur [Fig. 4], la bouteille 1 peut comprendre un chapeau 21 de protection du robinet 20. Le chapeau 21 est par exemple fixé rigidement à la bouteille 1. Le chapeau 21 forme une paroi de protection autour d'au moins une partie du robinet 20.

En particulier, le robinet 20 peut-être un simple port de remplissage et/ou de soutirage muni d'un clapet à fermeture automatique (à ouverture par actionnement mécanique et/ou via une pression de gaz. En variante, ce premier robinet peut être un robinet plus élaboré, muni notamment d'un clapet d'isolation commandé par un organe de commande manuel, électrique et/ou pneumatique. Par exemple, la structure d'un robinet telle que décrite dans le document WO2017/064380A1 pourra être utilisée en tout ou partie.

Le robinet 20 comprend classiquement un circuit interne de fluide relié au volume de stockage proprement dit du récipient 1 et peut comprendre en outre tout autre organe fonctionnel habituel pour un robinet.

Le récipient 1 est muni d'un dispositif indicateur un piston 2b sensible à la pression régnant dans le récipient 1. Le piston 2b est configuré pour se déplacer, selon la valeur de la pression dans le récipient 1, entre au moins une position rétractée et une position déployée.

Un organe d'indication 2a mobile est prévu pour indiquer la pression dans le récipient 1 par coopération avec le piston 2b de sorte que, selon la position occupée par le piston 2b, l'organe d'indication 2a se déplace entre au moins une première position représentative d'une première valeur de pression et une deuxième position représentative d'une deuxième valeur de pression.

Selon l'invention, le dispositif indicateur comprend en outre un capteur 4 configuré pour détecter la position de l'organe d'indication 2a et au moins un circuit électrique 5 relié ou intégré audit capteur 4. Par « circuit électrique », on entend plusieurs composants électriques reliés électriquement entre eux et pouvant être parcourus par un courant électrique.

Le circuit électrique 5 peut occuper au moins un premier état électrique ou un deuxième état électrique selon la position de l'organe d'indication 2a.

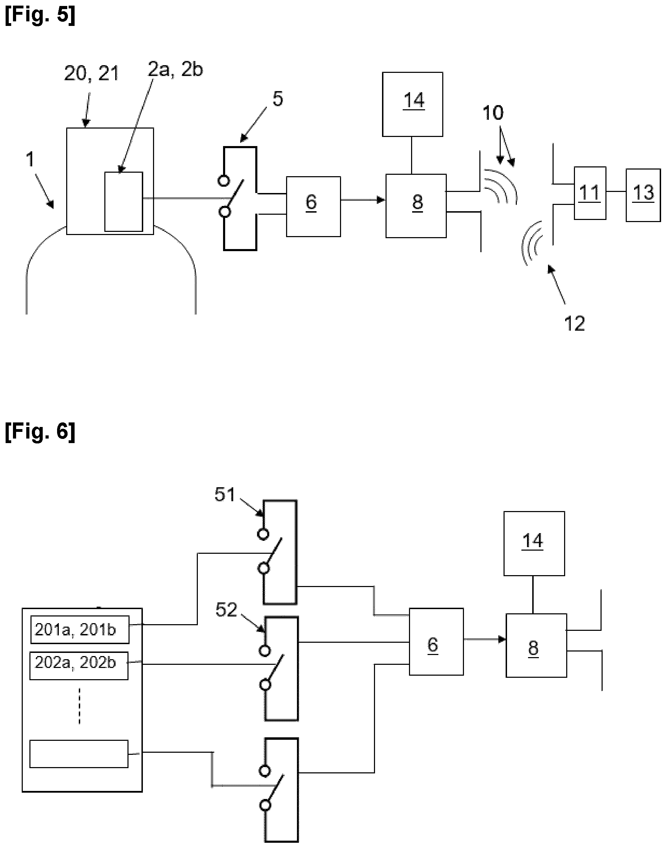

En fonctionnement, une logique électronique 6 lit l'état électrique du circuit 5 et produit un signal électrique représentatif de cet état. Ce signal électrique est transmis à l'organe de communication 8 qui est configuré pour le convertir en un signal de communication 10 à distance sans fil représentatif de la position de l'organe d'indication 2a, et donc de la pression dans le récipient 1. [Fig. 5] schématise un mode de fonctionnement de l'invention.

La dérivation de l'information sur la pression peut être opérée par la logique électronique 6, au moyen par exemple d'une ou plusieurs règles de calcul stockées dans la logique électronique 6 ou dans une mémoire 14 reliée à la logique électronique 6. De préférence, la logique électronique 6 comprend au moins un microprocesseur, un microcontrôleur ou tout autre système approprié d'acquisition et de traitement de données provenant du capteur 4 et/ou du circuit électrique 5.

Ainsi, il est possible de déterminer automatiquement un état relatif à la quantité de fluide contenu dans le récipient 1 au moyen d'une mesure de la pression dans le récipient 1, et ce par détection à distance sans fil. Cette détermination peut aussi être effectuée aisément sur plusieurs récipients sans que l'opérateur n'ait à visualiser chaque récipient. La présente invention permet une meilleure gestion d'un parc de récipient de fluide et peut être utilisée notamment pour proposer des services tels que l'assistance à la gestion de stock, la commande automatique de fluide, la traçabilité des utilisations...

Par exemple, le circuit électrique 5 peut occuper le premier état électrique lorsque l'organe indicateur 2a est dans sa première position indiquant une première valeur de pression à laquelle on fait correspondre un état dit « pression normale » ou « plein », dans lequel la pression est supérieure à un seuil haut prédéterminé.

Le circuit électrique 5 peut occuper le deuxième état électrique lorsque l'organe indicateur 2a est dans sa deuxième position indiquant une deuxième valeur de pression à laquelle on fait correspondre un état dit « pression basse » ou « vide », dans lequel la pression est inférieure à un seuil bas prédéterminé.

De préférence, l'organe indicateur 2a occupe la première position ou la deuxième position respectivement lorsque le piston est dans sa position déployée ou rétractée. D'autres configurations de correspondance entre la position du piston 2b, la position de l'organe d'indication 2a et la valeur de pression dans le récipient 1 ou son état de remplissage sont bien sûr envisageables. Le piston 2b et/ou l'organe d'indication 2a peuvent également occuper au moins une position intermédiaire entre la position déployée et la position rétractée et/ou entre la première et la deuxième position de façon à indiquer au moins un état de remplissage ou un niveau de pression intermédiaires.

De préférence, le capteur 4 est configuré pour mesurer une grandeur physique représentative de la position de l'organe d'indication 2a.

Ainsi, comme illustré sur [Fig. 1] ou [Fig. 2], le capteur 4 peut être un capteur magnétique et l'organe d'indication 2a peut comprendre un élément magnétique 3, tel un aimant ou autre pièce ferromagnétique, solidaire de l'organe d'indication 2a. Le capteur 4 est configuré pour mesurer un champ magnétique induit par l'élément magnétique 3.

De préférence, l'organe d'indication 2a et le capteur 4 coopèrent de sorte qu'un déplacement de l'organe d'indication 2a entre sa première et sa deuxième position entraîne une variation du champ magnétique mesuré par le capteur 4 et un changement de l'état électrique du circuit 5.

Dans le cadre de l'invention, le capteur 4 peut comprendre une cellule à effet Hall ou bien un interrupteur de type « reed », également appelé ampoule « reed » ou interrupteur à lames souples. Ce type d'interrupteur est un interrupteur magnétique comprenant au moins deux zones de contact 7 électrique ([Fig. 1]) magnétisables et élastiques. En présence d'un champ magnétique, les zones de contacts s'aimantent par influence, et sont attirés l'une par l'autre. Les zones 7 se rapprochent et se touchent, établissant un courant électrique dans le circuit 5. Lorsque le champ magnétique cesse, l'aimantation cesse aussi, et l'élasticité des contacts les écarte, coupant le courant.

L'utilisation d'un interrupteur reed permet une plus grande durée de vie ainsi qu'une fiabilité améliorée, avec environ 10 millions de cycles ouverture/fermeture pouvant être réalisés.

En variante, illustrée par [Fig. 2], le capteur 4 peut comprendre une bobine comprenant un enroulement de fil conducteur électrique. L'organe d'indication 2a muni d'un élément magnétique 3 est configuré de manière à se déplacer au moins en partie dans la bobine. Le capteur 4 est alors du type analogique et comprend un circuit de mesure du champ magnétique induit dans la bobine.

Selon un autre mode de réalisation, l'organe d'indication 2a comprend un élément conducteur 3 formé d'un matériau conducteur électrique. De préférence, le capteur 4 comprend deux pôles électriques intégrés ou reliés au circuit électrique 5 et pouvant être relié électriquement et sélectivement entre eux via l'élément conducteur électrique 3, directement ou via des relais électriques intermédiaires.

Le capteur 4 peut aussi comprendre un microrupteur, ou minirupteur, comprenant au moins deux pôles électriques et une languette actionnable sous l'effet d'une pression exercée par l'organe d'indication 2a ou sous l'effet d'un champ magnétique induit par un élément magnétique 3 de manière à ce que la languette assure ou pas un contact électrique entre lesdits pôles électriques.

De préférence, l'organe d'indication 2a et le capteur 4 sont configurés de sorte qu'un déplacement de l'organe d'indication 2a entre la première position à la deuxième position fait commuter le circuit électrique 5 entre le premier état électrique et le deuxième état électrique, de préférence en déclenchant, par actionnement mécanique ou magnétique, l'ouverture ou la fermeture d'un contact électrique, changeant ainsi l'état d'un circuit électrique, état qui peut être lu par la logique électronique 6.

De préférence, le circuit électrique 5 est configuré pour occuper le premier état électrique lorsque la pression dans le récipient 1 est supérieure ou égale à un seuil haut prédéterminé et pour occuper le deuxième état électrique lorsque la pression dans le récipient 1 est inférieure à un seuil bas prédéterminé.

De préférence, le signal de communication 10 comprend au moins un bit d'information, pouvant prendre uniquement deux valeurs selon que le circuit électrique est dans son premier état ou dans son deuxième état. Cette information peut être une information directe sur l'état du circuit électrique ou bien une information dérivée de l'état du circuit électrique, telle qu'une information sur le dépassement ou non du seuil prédéterminé, l'état rempli ou vide du récipient 1.

De façon avantageuse, le premier état électrique et le deuxième état électrique du circuit électrique 5 correspondent respectivement à un état ouvert dans lequel aucun courant électrique ne peut circuler dans le circuit électrique 5 et à un état fermé dans lequel un courant électrique peut circuler dans le circuit électrique 5, ou inversement. Ainsi, la détection d'un dépassement ou non du seuil prédéterminé, via le changement d'état du circuit 5, est réalisée de manière fiable et simplifiée.

Ainsi, le dispositif indicateur de pression génère un signal simple représentatif de la pression dans le récipient 1, au moyen d'un état logique ne pouvant prendre que deux valeurs, le premier et le deuxième états électriques.

La lecture d'un simple état électrique offre l'avantage de nécessiter des puissances électriques grandement réduites, typiquement une dizaine de microwatts voire quelques microwatts au plus, par rapport à la lecture d'un capteur analogique qui produit une information plus complexe dont le traitement nécessite plus d'énergie. Selon un mode de réalisation particulier, le circuit électrique 5 est configuré pour commuter du premier état électrique vers le deuxième état électrique lorsque la pression dans la récipient 1 varie d'une valeur initiale supérieure ou égale au seuil bas prédéterminé à une nouvelle valeur inférieure audit seuil bas prédéterminé et/ou pour commuter du deuxième état électrique vers le premier état électrique lorsque la pression varie d'une valeur initiale inférieure ou égale au seuil haut prédéterminé à une nouvelle valeur supérieure audit seuil haut prédéterminé.

Par « valeur initiale », on entend respectivement une valeur de la pression à un instant initial dans lequel le récipient 1 est dans un état initial et par « nouvelle valeur », on entend une valeur modifiée de la pression, mesurée à un instant ultérieur à l'instant initial.

De préférence, on prévoit deux seuils haut et bas prédéterminés distincts en fonction desquels la commutation du circuit électrique 5 se déclenche, de préférence encore, le seuil bas est strictement inférieur au seuil haut.

Ainsi, le circuit électrique 5 peut être configuré pour commuter entre le premier état et le deuxième état lorsque la valeur de pression atteint ou passe par un seuil donné, et ce en tenant compte de seuils de commutation de valeurs différentes selon le sens dans lequel la pression varie, c'est-à-dire si la variation est croissante ou décroissante.

Cela permet de tenir compte du phénomène d'hystérésis qui caractérise certains capteurs et de s'affranchir des conséquences de légères variations de la pression qui pourraient entraîner des changements intempestifs de l'état du circuit électrique 5 sans pour autant refléter un réel changement de la pression dans le récipient 1. Il s'ensuit une plus grande fiabilité et une meilleure reproductibilité de fonctionnement du dispositif selon l'invention.

Selon un exemple de réalisation, le premier état électrique et le deuxième état électrique du circuit 5 sont représentatifs respectivement d'un état « pression normale » et d'un état « pression basse » du récipient 1.

Lorsque l'état initial du récipient 1 est "pression normale", le circuit électrique occupe initialement le premier état électrique. La commutation du premier état électrique vers le deuxième état électrique s'effectue par comparaison avec un seuil S1 bas, par exemple S1 = 15 bar. Ainsi, lorsque la pression mesurée par le capteur 4 varie d'une valeur initiale supérieure ou égale à 15 bar à une nouvelle valeur inférieure à 15 bar, le dispositif indicateur bascule de "pression normale" à "pression basse".

Lorsque l'état initial du récipient est "pression basse", le circuit électrique occupe initialement le deuxième état électrique. La commutation du deuxième état électrique vers le premier état électrique s'effectue par comparaison avec un seuil S2 haut, par exemple S2 = 16 bar. Ainsi, lorsque la pression mesurée par le capteur 4 varie d'une valeur initiale inférieure ou égale à 16 bar à une nouvelle valeur supérieure à 16 bar, l'état du récipient 1 bascule de "pression basse à "pression normale". Dans cet exemple, après une commutation du circuit électrique 5 d'un état initial vers un autre état, il faut donc une variation d'au moins 1 bar pour que le circuit repasse dans l'état initial. D'autres valeurs de pressions sont bien entendu envisageables.

La prise en compte de deux seuils de commutation décalés assure donc la stabilité de la détermination de la pression du récipient 1, en évitant que la moindre variation, lorsqu'elle se situe au voisinage d'un seuil, n'entraîne un changement d'état du circuit 5. En pratique, on détermine la différence entre les deux seuils, appelée couramment hystérésis, de façon qu'elle soit sensiblement supérieure aux variations non significatives probables de la grandeur physique, également appelées "bruit". Avantageusement, le seuil bas S1 et le seuil haut S2 prédéterminés présentent une différence relative ΔS=|S1-S2|/S1 d'au moins 1%, de préférence encore au moins 5%. Une telle différence permet de s'affranchir efficacement des fluctuations pouvant s'apparenter à du bruit de mesure, c'est-à-dire de faibles variations de la pression mesurée par le capteur 4 qui se produiraient indépendamment d'un changement d'état du récipient 1, tout en déclenchant la commutation du circuit électrique d'un état à un autre lorsque la grandeur physique présente une variation suffisante du fait d'un réel changement d'état du récipient 1.

Il est aussi envisageable que le bas S1 et le seuil haut prédéterminés soient confondus, la commutation étant déclenchée par une variation croissante et/ou décroissante de la pression relativement à un seuil de commutation unique.

[Fig. 1], [Fig. 2], [Fig. 3] et [Fig. 4] représentent des exemples de fonctionnement du piston 2b et de l'organe indicateur 2a.

Le piston 2b peut être une pièce de forme générale cylindrique, pleine ou tubulaire. De préférence, le piston 2b s'étend au moins en partie dans une volume interne 1a sous pression du récipient 1 délimité par une paroi 40, en particulier un volume interne en communication fluidique avec le volume de stockage, par exemple un volume interne du circuit de fluide du robinet du récipient. Ainsi, la pression de fluide s'exerce sur le piston 2b.

De préférence, le piston 2b est mobile en translation entre au moins sa position déployée ([Fig. 3]) et sa position rétractée ([Fig. 4]) sous l'effet d'une variation de pression dans le récipient 1. Avantageusement, le piston 2b est configuré pour se déplacer en translation vers l'intérieur du récipient 1, i. e. vers sa position rétractée, sous l'effet d'une diminution de la pression s'exerçant sur le piston 2b à l'intérieur du récipient 1.

Avantageusement, le dispositif indicateur comprend un premier élément élastique 31, de préférence un ressort, configuré pour exercer sur le piston 2b une première force de rappel opposée à la pression s'exerçant sur le piston 2b dans le récipient 1.

Le piston 2b peut être configuré, par exemple par un dimensionnement approprié du premier élément élastique 31, pour occuper la position déployée lorsque la pression dans le récipient 1 est supérieure ou égale à un seuil haut prédéterminé et pour occuper la position rétractée lorsque la pression dans le récipient 1 est inférieure à un seuil bas prédéterminé.

De préférence, le piston 2b est mobile en translation dans un passage 41 ménagé dans la paroi 40. Au moins un organe d'étanchéité 42, tel un joint d'étanchéité, peut être agencé entre le piston 2b et la paroi 40 de façon à assurer une étanchéité fluidique entre l'intérieur et l'extérieur du récipient 1. De préférence l'organe d'étanchéité 42 est agencé autour du piston 2b dans une gorge périphérique ménagée dans la paroi 40.

Il est à noter que la présence d'un tel organe d'étanchéité peut entraîner un phénomène d'hystérésis dans la réponse du piston 2b à une variation de pression dans le récipient 1, ce phénomène étant dû au frottement induit par l'organe d'étanchéité. La prise en compte de seuils de déclenchement distincts telle que décrite précédemment est dans ce cas particulièrement avantageuse.

Le déplacement en translation du piston 2b entraîne un changement de position de l'organe indicateur 2a agencé à l'extérieur du récipient 1 qui peut être opéré selon différents modes de réalisation.

[Fig. 1] et [Fig. 2] représentent un mode de réalisation dans lequel le piston 2b et l'organe indicateur 2a sont formés d'un bloc, i. e. forment une même pièce. Dans ce cas, le mouvement de l'organe indicateur 2a et le mouvement du piston 2b ont lieu selon une direction et une amplitude identiques.

[Fig. 3] et [Fig. 4] représentent un mode de réalisation dans lequel le piston 2b et l'organe indicateur 2a sont des pièces distinctes, le mouvement de l'organe indicateur 2a et le mouvement du piston 2b ayant lieu selon des directions et des amplitudes indépendantes.

Selon ce mode de réalisation, le piston 2b forme, dans sa position déployée, un organe de blocage de l'organe d'indication 2a. Par exemple, un orifice 43, débouchant ou non, peut être ménagé dans l'organe d'indication 2a de façon à recevoir le piston mobile 2b qui forme ainsi une butée. De façon alternative, on peut prévoir une protubérance agencée sur l'organe d'indication 2a de façon à bloquer le déplacement de l'organe 2a lorsque le piston 2b est en position déployée.

Un déplacement du piston 2b vers sa position rétractée libère l'élément mobile 2a et autorise son déplacement entre la première position et la deuxième position.

De préférence, un deuxième élément élastique 32, de préférence un ressort, est agencé de façon à exercer une deuxième force de rappel sur l'organe d'indication 2a tendant à le déplacer dans la deuxième position.

Ce mode de réalisation permet de déclencher un déplacement automatique de l'organe d'indication 2a dans la deuxième position et ainsi un changement automatique de l'état électrique du circuit 5 lors d'une variation prédéfinie de la pression dans le récipient 1.

Selon une variante avantageuse, schématisée sur [Fig. 6], le dispositif indicateur de pression comprend une pluralité de pistons 201b, 202b, conjugués à une pluralité d'organes d'indications 201a, 202a, et à une pluralité de circuits électriques 51, 52, .... Le dispositif comprend un nombre entier N de circuits électriques 51, 52, ...

De préférence, chaque circuit 51, 52,... est associé à des seuils hauts et bas prédéterminés respectifs différent les uns des autres.

La logique électronique 6 est configurée pour détecter les états électriques de chacun des N circuits électriques 51, 52,... et produire au moins un signal électrique représentatif des états électriques desdits circuits. L'organe de communication radiofréquence 8 est configuré pour recevoir ce signal électrique et le convertir en un signal de communication 10 à distance sans fil contenant une information représentative des états électriques des N circuits électriques 51, 52,...

Ce signal prend ainsi la forme d'un code binaire d'au moins N bits, chaque bit pouvant avoir deux valeurs selon que le circuit électrique est dans son premier état ou dans son deuxième état. Le dispositif peut ainsi fournir une information plus précise quant à la pression dans le récipient 1.

Afin de faciliter la détermination de l'état du récipient 1, on associera avantageusement à l'information sur l'état d'un circuit électrique une information d'identification du circuit électrique ou du capteur associé.

Plus le nombre N est grand, plus la détermination de l'état de remplissage du récipient 1 peut être précise. Toutefois, le nombre de capteurs ne doit pas être trop important afin de ne pas complexifier le dispositif de fourniture de fluide. De préférence, N est compris entre 1 et 10, de préférence encore entre 1 et 5.

De préférence, l'organe de communication 8 est configuré pour émettre des données par ondes électromagnétique, de préférence par ondes radiofréquences. Avantageusement, l'organe de communication 8 est un organe de communication radiofréquence configuré pour émettre et/ou recevoir un signal radiofréquence selon l'un au moins des technologies suivantes : « Identification par Radio Fréquence » (« RFID » pour *Radio Frequency Identification* en anglais).

En particulier, l'organe de communication 8 peut être configuré pour émettre et/ou recevoir un signal radiofréquence selon la technologie « RFID » ayant une fréquence dite « ultra-haute » allant typiquement de plusieurs centaines de MHz à quelques GHz, de préférence comprise entre 850 et 950 MHz. L'utilisation d'une fréquence ultra-haute permet d'accroître la distance de transmission de l'organe de communication 8, typiquement jusqu'à une dizaine de mètres.

D'autres fréquences restent envisageables. Par exemple, la technologie peut être du type « RFID basse » dite « basse fréquence » (fréquence de l'ordre de une à quelques centaines de kHz) ou « haute fréquence » (de l'ordre de une à quelques dizaines de MHz).

On pourra aussi envisager d'utiliser la technologie « Communication en champ proche » (« NFC » pour *Near Field Communication*).

Optionnellement, l'organe de communication 8 est relié à ou intègre une alimentation électrique, telle une pile ou une cellule photovoltaïque, ce qui permet d'accroître la portée de communication sans fil, typiquement jusqu'à 100 mètres. Ceci est avantageux pour les récipients 1 ou les sites de stockage de grandes dimensions. D'autres technologies de communication sans contact sont envisageables : WIFI, Bluetooth ...

De façon générale, l'utilisation d'une communication sans contact améliore la fiabilité du système, du fait de l'absence de zone de contact, ce type de zone s'usant avec le temps.

Selon une variante avantageuse, l'organe de communication 8 est en outre configuré pour recevoir un signal d'interrogation 12 envoyé par un organe de lecture 11 formant une entité physique distincte du dispositif de fourniture de fluide et pour émettre, en réponse audit signal d'interrogation 12, un signal de communication à distance sans fil 10 contenant une information représentative de l'état électrique d'au moins un circuit électrique 5.

Ainsi, le dispositif de fourniture de fluide est configuré pour communiquer dans les deux sens avec tout dispositif de communication extérieur, notamment un téléphone intelligent (« smartphone »), une passerelle de communication.

De préférence, les organes 8, 11 de communication et de lecture utilisent une technologie de communication à distance sans fil de même nature.

De préférence, l'organe 11 électronique de lecture intègre ou est relié à une unité électronique 13 configurée pour recevoir des données provenant de l'organe 11 électronique de lecture du second ensemble et assurer l'acquisition, le traitement et/ou la transmission de ces données à distance, avec ou sans fil, par exemple vers un relai de communication et/ou vers une plate-forme centrale de traitement de données. L'unité électronique 13 comprend de préférence un microcontrôleur.

Selon un mode de réalisation, l'organe électronique de communication 8 et/ou l'organe électronique de lecture 11 peuvent comprendre chacun une antenne d'émission de données sous forme d'ondes électromagnétiques radio ou autre De préférence, l'organe de communication 8 comprend une antenne UHF et est configuré pour alimenter électriquement, via l'énergie d'un signal d'interrogation 12 envoyé à ladite boucle inductive, la logique électronique 6 et/ou le capteur de mesure 2, 3, 4.

Plus précisément, l'organe de communication 8 peut comprendre une antenne formant un dipôle électrique capable de recevoir le champ électromagnétique provenant de l'organe de lecture 11 et de convertir au moins une partie de l'énergie de ce champ électromagnétique en énergie électrique.

De préférence, l'antenne l'organe de communication 8 est couplée à un circuit ou puce électronique, par exemple un circuit intégré. L'organe de communication 8 est ainsi alimenté électriquement, via son antenne, par le signal d'interrogation 12. Optionnellement, le dispositif selon l'invention comprend en outre une mémoire 14 reliée à la logique électronique 6 et/ou à l'organe de communication 8, ou intégrée à l'un ou l'autre de ces éléments, ladite mémoire 14 étant configurée pour stocker au moins une information parmi : une identification du récipient 1, une information relative à la nature du fluide contenu dans le récipient 1, une information relative à la contenance maximale du récipient 1, une information relative à la quantité de fluide contenu dans le récipient 1, une information d'identification du propriétaire ou utilisateur du récipient 1, une information relative au site d'utilisation du récipient 1, une information relative à la date de péremption du fluide contenu dans le récipient 1, une information relative à une certification du fluide contenu dans le récipient 1, un historique d'au moins une des informations précédentes. L'organe de communication 8 peut ainsi transmettre à distance un signal de communication 10 contenant une ou plusieurs de ces informations.

De préférence, tout ou partie des éléments suivants sont agencés sur ou autour du robinet 20 du récipient 1 : l'organe de communication 8, le circuit électrique 5, la logique électronique 6.

Selon le cas, l'organe électronique de communication 8 peut être intégré au robinet 20 ou bien intégré à un module électronique de communication distinct du robinet qui peut être fixé de façon amovible sur le robinet 20. Ce module électronique peut intégrer également tout ou partie de la logique électronique 6.

Par exemple, l'organe 8 de communication peut être intégré à un collier, flexible ou rigide, de préférence en matière plastique. Par exemple, le collier est fixé au sommet du récipient 1, par exemple entre le robinet 20 et le récipient 1.

Tout ou partie des éléments du dispositif d'indication de la pression peuvent aussi être intégrés dans le chapeau de protection 21 et/ou solidaires du chapeau.

Selon le cas, le capteur 4 pourra être agencé de manière à mesurer la pression dans le récipient 1 au niveau du circuit interne de fluide du robinet 20 ou au niveau du volume interne à proprement parler du récipient 1 ou bien au niveau d'une canalisation de fluide en communication fluidique avec le volume interne du récipient de fluide.

## Revendications

1. Récipient (1) de fluide sous pression comprenant un dispositif indicateur de pression, ledit dispositif comprenant :
- un piston (2b) sensible à la pression régnant dans le récipient (1), le piston (2b) pouvant se déplacer, selon la valeur de la pression dans le récipient (1), entre au moins une position rétractée et une position déployée,
- un organe d'indication (2a) destiné à coopérer avec le piston (2b), l'organe d'indication (2a) pouvant se déplacer, selon la position du piston (2b), entre au moins une première position représentative d'une première valeur de pression et une deuxième position représentative d'une deuxième valeur de pression,
**caractérisé en ce qu'**il comprend en outre
- un capteur (4) de la position de l'organe d'indication (2a),
- au moins un circuit électrique (5) relié ou intégré audit capteur (4) et configuré pour occuper au moins un premier état électrique ou un deuxième état électrique selon la position de l'organe d'indication (2a),
- une logique électronique (6) reliée au circuit électrique (5) et configurée pour produire un signal électrique représentatif de la position de l'organe d'indication (2a), et
- un organe de communication (8) relié à la logique électronique (6) configuré pour convertir ledit signal électrique en un signal (10) de communication à distance sans fil représentatif de la position de l'organe d'indication (2a).

2. Dispositif selon la revendication 1, **caractérisé en ce que** l'organe d'indication (2a) comprend un élément magnétique (3), de préférence un aimant permanent, le capteur (4) de la position de l'élément mobile (2a) comprenant un capteur sensible à un champ magnétique induit par l'élément magnétique (3).

3. Dispositif selon la revendication 1, **caractérisé en ce que** l'organe d'indication (2a) comprend un élément conducteur électrique (3), le capteur (4) de la position de l'organe d'indication (2a) comprenant deux pôles électriques intégrés ou reliés au circuit électrique (5), lesdits pôles électriques étant destinés à être reliés sélectivement entre eux via l'élément conducteur électrique (3).

4. Dispositif selon l'une des revendications précédentes, **caractérisé en ce que** l'organe d'indication (2a) et le capteur (4) sont configurés de sorte qu'un déplacement de l'organe d'indication (2a) entre la première position à la deuxième position fait commuter le circuit électrique (5) entre le premier état électrique et le deuxième état électrique.

5. Dispositif selon l'une des revendications précédentes, **caractérisé en ce que** le piston (2b) est configuré pour occuper la position déployée lorsque la pression dans le récipient (1) est supérieure ou égale à un seuil haut prédéterminé et pour occuper la position rétractée lorsque la pression dans le récipient (1) est inférieure à un seuil bas prédéterminé.

6. Dispositif selon l'une des revendications précédentes, **caractérisé en ce que** l'organe d'indication (2a) est destiné à coopérer avec le piston (2b) de sorte qu'un déplacement du piston (2b) de sa position déployée à sa position rétractée entraîne un déplacement automatique de l'organe d'indication (2a) de sa première position à sa deuxième position.

7. Dispositif selon l'une des revendications précédentes, **caractérisé en ce que** le piston (2b) s'étend au moins en partie dans un volume interne (1a) sous pression du récipient (1) de sorte que le fluide exerce une pression sur le piston (2b).

8. Dispositif selon la revendication 7, **caractérisé en ce que** le piston (2b) est configuré pour se déplacer en translation entre au moins la position rétractée et la position déployée sous l'effet d'une variation de la pression s'exerçant sur le piston (2b).

9. Dispositif selon l'une des revendications 7 ou 8, **caractérisé en ce qu'**il comprend un premier élément élastique (31), de préférence un ressort, configuré pour exercer sur le piston (2b) une première force de rappel opposée à la pression s'exerçant sur le piston (2b) dans le récipient (1).

10. Dispositif selon l'une des revendications précédentes, **caractérisé en ce que** le récipient (1) comprend une paroi (40) délimitant un volume interne (1a) sous pression, au moins une partie du piston (2b) pouvant se déplacer en translation dans ledit volume interne et l'organe d'indication (2a) étant situé à l'extérieur du volume interne.

11. Dispositif selon la revendication 11, **caractérisé en ce que** le piston (2b) est mobile en translation dans un passage (41) ménagé dans la paroi (40) du récipient (1), le capteur (4) étant positionné en regard du passage (1a).

12. Dispositif selon l'une des revendications précédentes, **caractérisé en ce que** l'organe d'indication (2a) et le piston (2b) sont solidaires l'un de l'autre, de préférence l'organe d'indication (2a) et le piston (2b) sont formés d'un bloc, l'organe d'indication (2a) formant une portion d'extrémité du piston (2b).

13. Dispositif selon l'une des revendications 1 à 11, **caractérisé en ce que** l'organe d'indication (2a) et le piston (2b) sont des pièces distinctes et sont configurées de sorte que le piston (2b) forme, dans sa position déployée, un organe de blocage de l'organe d'indication (2a) et qu'un déplacement du piston (2b) vers sa position rétractée libère l'élément mobile (2a) et autorise son déplacement entre la première position et la deuxième position.

14. Dispositif selon l'une des revendications précédentes, **caractérisé en ce qu'**il comprend un deuxième élément élastique (32), de préférence un ressort, configuré pour exercer une deuxième force de rappel tendant à rappeler l'organe d'indication (2a) de la deuxième position à la première position.

## Patentansprüche

1. Druckfluidbehälter (1), welcher eine Druckanzeigevorrichtung umfasst, wobei diese Vorrichtung umfasst:
- einen Kolben (2b), der empfindlich gegenüber dem im Behälter (1) herrschenden Druck ist, wobei sich der Kolben (2b) je nach dem Wert des Drucks im Behälter (1) zwischen mindestens einer eingefahrenen Position und einer ausgefahrenen Position bewegen kann,
- ein Anzeigeorgan (2a), das dazu bestimmt ist, mit dem Kolben (2b) zusammenzuwirken, wobei sich das Anzeigeorgan (2a) je nach der Position des Kolbens (2b) zwischen mindestens einer ersten Position, die für einen ersten Druckwert repräsentativ ist, und einer zweiten Position, die für einen zweiten Druckwert repräsentativ ist, bewegen kann,
**dadurch gekennzeichnet, dass** sie außerdem umfasst:
- einen Sensor (4) für die Position des Anzeigeorgans (2a),
- mindestens eine elektrische Schaltung (5), die mit dem Sensor (4) verbunden oder integriert ist und dafür ausgelegt ist, je nach der Position des Anzeigeorgans (2a) mindestens einen ersten elektrischen Zustand oder einen zweiten elektrischen Zustand anzunehmen,
- eine elektronische Logik (6), die mit der elektrischen Schaltung (5) verbunden ist und dafür ausgelegt ist, ein elektrisches Signal zu erzeugen, das für die Position des Anzeigeorgans (2a) repräsentativ ist, und
- ein Kommunikationsorgan (8), das mit der elektronischen Logik (6) verbunden ist und dafür ausgelegt ist, das elektrische Signal in ein Signal (10) für die drahtlose Fernkommunikation umzuwandeln, das für die Position des Anzeigeorgans (2a) repräsentativ ist.

2. Vorrichtung nach Anspruch 1, **dadurch gekennzeichnet, dass** das Anzeigeorgan (2a) ein magnetisches Element (3), vorzugsweise einen Permanentmagneten, umfasst, wobei der Sensor (4) für die Position des beweglichen Elements (2a) einen Sensor umfasst, der empfindlich gegenüber einem von dem magnetischen Element (3) induzierten Magnetfeld ist.

3. Vorrichtung nach Anspruch 1, **dadurch gekennzeichnet, dass** das Anzeigeorgan (2a) ein elektrisch leitendes Element (3) umfasst, wobei der Sensor (4) für die Position des Anzeigeorgans (2a) zwei elektrische Pole umfasst, die mit der elektrischen Schaltung (5) integriert oder verbunden sind, wobei die elektrischen Pole dazu bestimmt sind, über das elektrisch leitende Element (3) selektiv miteinander verbunden zu werden.

4. Vorrichtung nach einem der vorhergehenden Ansprüche, **dadurch gekennzeichnet, dass** das Anzeigeorgan (2a) und der Sensor (4) so ausgebildet sind, dass eine Bewegung des Anzeigeorgans (2a) zwischen der ersten Position und der zweiten Position ein Umschalten der elektrischen Schaltung (5) zwischen dem ersten elektrischen Zustand und dem zweiten elektrischen Zustand bewirkt.

5. Vorrichtung nach einem der vorhergehenden Ansprüche, **dadurch gekennzeichnet, dass** der Kolben (2b) dafür ausgelegt ist, die ausgefahrene Position einzunehmen, wenn der Druck im Behälter (1) größer oder gleich einem vorbestimmten hohen Schwellenwert ist, und die eingefahrene Position einzunehmen, wenn der Druck im Behälter (1) niedriger als ein vorbestimmter niedriger Schwellenwert ist.

6. Vorrichtung nach einem der vorhergehenden Ansprüche, **dadurch gekennzeichnet, dass** das Anzeigeorgan (2a) dazu bestimmt ist, mit dem Kolben (2b) so zusammenzuwirken, dass eine Bewegung des Kolbens (2b) aus seiner eingefahrenen Position in seine ausgefahrene Position eine automatische Bewegung des Anzeigeorgans (2a) aus seiner ersten Position in seine zweite Position zur Folge hat.

7. Vorrichtung nach einem der vorhergehenden Ansprüche, **dadurch gekennzeichnet, dass** sich der Kolben (2b) wenigstens teilweise in einem unter Druck stehenden Innenvolumen (1a) des Behälters (1) erstreckt, so dass das Fluid einen Druck auf den Kolben (2b) ausübt.

8. Vorrichtung nach Anspruch 7, **dadurch gekennzeichnet, dass** der Kolben (2b) dafür ausgelegt ist, sich unter der Wirkung einer Änderung des Drucks, der auf den Kolben (2b) ausgeübt wird, translatorisch zwischen mindestens der eingefahrenen Position und der ausgefahrenen Position zu bewegen.

9. Vorrichtung nach einem der Ansprüche 7 oder 8, **dadurch gekennzeichnet, dass** sie ein erstes elastisches Element (31), vorzugsweise eine Feder, umfasst, das dafür ausgelegt ist, auf den Kolben (2b) eine erste Rückstellkraft auszuüben, die entgegengesetzt zu dem Druck ist, der auf den Kolben (2b) im Behälter (1) ausgeübt wird.

10. Vorrichtung nach einem der vorhergehenden Ansprüche, **dadurch gekennzeichnet, dass** der Behälter (1) eine Wand (40) umfasst, die ein unter Duck stehendes Innenvolumen (1a) begrenzt, wobei sich wenigstens ein Teil des Kolbens (2b) in dem Innenvolumen translatorisch bewegen kann und das Anzeigeorgan (2a) sich außerhalb des Innenvolumens befindet.

11. Vorrichtung nach Anspruch 11, **dadurch gekennzeichnet, dass** der Kolben (2b) in einem Durchgang (41) translatorisch beweglich ist, der in der Wand (40) des Behälters (1) ausgebildet ist, wobei der Sensor (4) gegenüber dem Durchgang (1a) positioniert ist.

12. Vorrichtung nach einem der vorhergehenden Ansprüche, **dadurch gekennzeichnet, dass** das Anzeigeorgan (2a) und der Kolben (2b) fest miteinander verbunden sind und vorzugsweise das Anzeigeorgan (2a) und der Kolben (2b) aus einem Block gebildet sind, wobei das Anzeigeorgan (2a) einen Endabschnitt des Kolbens (2b) bildet.

13. Vorrichtung nach einem der Ansprüche 1 bis 11, **dadurch gekennzeichnet, dass** das Anzeigeorgan (2a) und der Kolben (2b) verschiedene Teile sind und so ausgebildet sind, dass der Kolben (2b) in seiner ausgefahrenen Position ein Organ zur Blockierung des Anzeigeorgans (2a) bildet und dass eine Bewegung des Kolbens (2b) in Richtung seiner eingefahrenen Position das bewegliche Element (2a) freigibt und dessen Bewegung zwischen der ersten Position und der zweiten Position ermöglicht.

14. Vorrichtung nach einem der vorhergehenden Ansprüche, **dadurch gekennzeichnet, dass** sie ein zweites elastisches Element (32), vorzugsweise eine Feder, umfasst, das dafür ausgelegt ist, eine zweite Rückstellkraft auszuüben, die bestrebt ist, das Anzeigeorgan (2a) aus der zweiten Position in die erste Position zurückzustellen.

## Claims

1. Pressurized fluid container (1) comprising a pressure indicator device, said device comprising:
- a piston (2b) sensitive to the prevailing pressure in the container (1), the piston (2b) being able to move, depending on the value of the pressure in the container (1), between at least a retracted position and a deployed position;
- an indicator component (2a) intended to cooperate with the piston (2b), the indicator component (2a) being able to move, depending on the position of the piston (2b), between at least a first position representing a first pressure value and a second position representing a second pressure value;
**characterized in that** it further comprises:
- a sensor (4) for the position of the indicator component (2a) ;
- at least one electrical circuit (5) connected to or integrated in said sensor (4) and configured to assume at least a first electrical state or a second electrical state depending on the position of the indicator component (2a);
- an electronic logic (6) connected to the electrical circuit (5) and configured to produce an electrical signal representing the position of the indicator component (2a); and
- a communication component (8) connected to the electronic logic (6) configured to convert said electrical signal into a wireless remote communication signal (10) representing the position of the indicator component (2a).

2. Device according to Claim 1, **characterized in that** the indicator component (2a) comprises a magnetic element (3), preferably a permanent magnet, the sensor (4) for the position of the movable element (2a) comprising a sensor sensitive to a magnetic field induced by the magnetic element (3).

3. Device according to Claim 1, **characterized in that** the indicator component (2a) comprises an electrically conductive element (3), with the sensor (4) for the position of the indicator component (2a) comprising two electrical poles integrated in or connected to the electrical circuit (5), said electrical poles being intended to be selectively connected together via the electrically conductive element (3).

4. Device according to any of the preceding claims, **characterized in that** the indicator component (2a) and the sensor (4) are configured so that a movement of the indicator component (2a) between the first position and the second position switches the electrical circuit (5) between the first electrical state and the second electrical state.

5. Device according to any of the preceding claims, **characterized in that** the piston (2b) is configured to assume the deployed position when the pressure in the container (1) is greater than or equal to a predetermined high threshold and to assume the retracted position when the pressure in the container (1) is less than a predetermined low threshold.

6. Device according to any of the preceding claims, **characterized in that** the indicator component (2a) is intended to cooperate with the piston (2b) so that a movement of the piston (2b) from its deployed position to its retracted position causes an automatic movement of the indicator component (2a) from its first position to its second position.

7. Device according to any of the preceding claims, **characterized in that** the piston (2b) at least partially extends into a pressurized internal volume (1a) of the container (1) so that the fluid exerts a pressure on the piston (2b).

8. Device according to Claim 7, **characterized in that** the piston (2b) is configured to translationally move between at least the retracted position and the deployed position under the effect of a variation in the pressure exerted on the piston (2b).

9. Device according to either of Claims 7 and 8, **characterized in that** it comprises a first resilient element (31), preferably a spring, configured to exert a first return force on the piston (2b) against the pressure exerted on the piston (2b) in the container (1).

10. Device according to any of the preceding claims, **characterized in that** the container (1) comprises a wall (40) demarcating a pressurized internal volume (1a), with at least part of the piston (2b) being able to translationally move in said internal volume and the indicator component (2a) being located outside the internal volume.

11. Device according to Claim 11, **characterized in that** the piston (2b) is translationally movable in a passage (41) provided in the wall (40) of the container (1), with the sensor (4) being positioned facing the passage (1a).

12. Device according to any of the preceding claims, **characterized in that** the indicator component (2a) and the piston (2b) are rigidly connected together, preferably the indicator component (2a) and the piston (2b) are formed by a block, with the indicator component (2a) forming an end portion of the piston (2b).

13. Device according to any of Claims 1 to 11, **characterized in that** the indicator component (2a) and the piston (2b) are separate parts and are configured so that the piston (2b) forms, in its deployed position, a component for blocking the indicator component (2a) and so that a movement of the piston (2b) toward its retracted position releases the movable element (2a) and allows it to move between the first position and the second position.

14. Device according to any of the preceding claims, **characterized in that** it comprises a second resilient element (32), preferably a spring, configured to exert a second return force tending to return the indicator component (2a) from the second position to the first position.
